## Europäisches Patentamt

## European Patent Office

## Office européen des brevets

(11) Publication number: **0 086 395 B1**

## EUROPEAN PATENT SPECIFICATION

(45) Date of publication of patent specification: **27.05.87**

(51) Int. Cl.⁴: **G 11 B 17/02, G 11 B 23/02**

(21) Application number: **83100920.4**

(22) Date of filing: **01.02.83**

(54) Disk drive.

(30) Priority: **22.06.82 US 391050**

(43) Date of publication of application:
**24.08.83 Bulletin 83/34**

(45) Publication of the grant of the patent:
**27.05.87 Bulletin 87/22**

(84) Designated Contracting States:
**DE FR GB IT**

(56) References cited:
**DE-B-2 946 686**
**GB-A-2 082 371**
**US-A-3 593 327**
**US-A-4 193 101**

(73) Proprietor: **International Business Machines Corporation**
**Old Orchard Road**
**Armonk, N.Y. 10504 (US)**

(72) Inventor: **Hickethier, Craig Richard**
**3020 5th Street**
**Boulder Colorado 80302 (US)**
Inventor: **Hogan, Ronald Eugene**
**4895 Durham Street**
**Boulder Colorado 80301 (US)**
Inventor: **Prahl, Marvin Edward**
**6635 Cherokee Ct.**
**Longmont Colorado 80501 (US)**

(74) Representative: **Petersen, Richard Courtenay et al**
**IBM Svenska AB Patent Operations Box 962**
**S-181 09 Lidingö (SE)**

Courier Press, Leamington Spa, England.

## Description

This invention relates to disk drives, and more particularly to disk drives for reading and writing magnetic signals on a flexible magnetic disk housed inside a rigid cartridge, the drive having a rotatable drive spindle mounted on a frame of the drive for rotating the magnetic disk, and having a read-write head for reading and writing signals on the magnetic disk.

In US—A—3,845,502, a rigid cartridge contains registration holes that mate with registration pins on the disk drive frame. The cartridge is loaded by placing it in a cartridge holder or carriage. The carriage pivots between the load and unload positions. As the carriage pivots down onto the disk drive frame, it lowers the cartridge on to the registration pins. The registration holes in the cartridge, when they mate with the registration pins on the frame, position the cartridge relative to the disk drive spindle.

The difficulty with such apparatus is that it is bulky and complex. Disk drives are typically used as part of another device such as a computer, a computer terminal or a typewriter. It is most important that the drive be compact, simple and low-cost. Use of a carriage to move the disk cartridge into the drive militates against making the drive a compact, simple and low-cost device.

GB—A—2 082 371 describes a disk drive for reading and writing magnetic signals on a flexible disk housed inside a rigid cartridge. The drive has a bevelled rotatable drive spindle mounted on a frame of the drive for rotating the magnetic disk and a read/write head for reading and writing signals on the magnetic disk. Further, the drive has registration pins for registering the cartridge vertically and horizontally relative to the spindle and recording head, the spindle and the recording head protruding above the registration plane of the guide and registration means into the initial insertion path of the cartridge. A cassette presser member is pivotely attached to the frame and provided with cassette pressing pins for pressing the cassette towards the registration means, when the presser member is brought to a closed position.

US—A—4 193 101 shows mechanism for loading a collet with respect to a rotatable machine hub for the purpose of gripping and driving a magnetic disk.

The invention relates to an improved disk drive for reading and writing signals on a flexible disk housed inside a rigid cartridge, the drive having a bevelled rotatable drive spindle mounted on a frame of the drive for rotating the magnetic disk, a read/write head for reading and writing signals on the magnetic disk and registering means for registering the cartridge in a plane relative to the spindle and the recording head, the spindle and the head protruding above the registration plane of the guide and registration means into the initial insertion path of the cartridge, the cartridge having registration recesses for mating with registration pins protruding above the registration plane of the cartridge beyond the head.

The invention is characterized by elongated fixed registration means for guiding the cartridge during its movement into the drive, the cartridge first tilting up over the spindle and passing clear over the head, bevelled registration pins then contacting the leading edge of the cartridge and lifting and cartridge over the tops of the pins, and the cartridge finally dropping onto the registration plane of the registration and guide means, when the recesses align with the pins, whereby the cartridge is registered in the proper plane and centered relative to the spindle.

In an embodiment of the invention, the cartridge is biased against the guide means by springs. As the cartridge slides into the drive along the guide surface, the leading edge is bevelled so that the cartridge tilts upward and rides over the spindle as the operator continues to shove the cartridge in the drive.

The upward tilted cartridge clears the recording head and moves further into the drive toward the registration pins. When the leading edge of the cartridge reaches the pins, the cartridge rides on top of the spindle and the pins. The spring pressure on top of the cartridge keeps the cartridge riding against the top of the spindle and pins until the registration holes in the cartridge reach the registration pins. When the holes reach the pins, the spring pressure on the top of the cartridge snaps the cartridge over the pins so that it again rests against the guide surface. At this registered position, the access holes in the cartridge for the spindle and recording head are aligned with the spindle and head.

Preferably, the tips of the registration pins are conical shaped and the registration holes are bevelled. This assists the lifting and lowering of the cartridge as it is loaded and the lifting of the cartridge as it is unloaded. The lowering and lifting is necessary for the cartridge to clear the recording head, a fragile component, as the cartridge is loaded and unloaded.

In addition, the back wall of the disk drive frame is positioned relative to the registration pins to prevent the registration holes in the cartridge from being pushed past the pins by the operator. If the leading edge of the cartridge strikes the back wall, the trailing edge of the registration holes has not passed the top of the conical pins so the cartridge will still snap into position when the operator stops pushing the cartridge into the drive.

The handle on the disk clamping lever, that actuates the collet to clamp the flexible disk to the spindle, has a cam surface to finish the loading of a disk cartridge that is substantially loaded but not registered. When the operator moves the lever, the cam surface of the handle finishes the loading by shoving the cartridge forward until it snaps down over the registration pins.‾

A significant advantage of this invention is that it feeds back to the tactile and auditory senses of the operator an indication that the cartridge has been properly loaded and registered in the drive. When the cartridge snaps over the pins, the operator feels and hears the snap action. In addition, the invention is compact, easy to manufacture and low in cost.

The scope of the invention is defined by the appended claims; and how it can be carried into effect is hereinafter particularly described with reference to the accompanying drawings, in which:—

FIGURE 1 is a top view of a portion of the disk drive according to the invention, showing a cartridge in the registered position;

FIGURE 2 is a broken sectional view on the line II—II of Fig. 1;

FIGURE 3 is an isometric cutaway view of the disk drive;

FIGURE 4 is a bottom plan view of the disk drive;

FIGURE 5 is a broken away isometric view of the disk drive, with a rigid disk cartridge in position for insertion into the drive;

FIGURE 6 is a top plan view of the disk drive with some components removed;

FIGURES 7A to 7D are cutaway side views showing the rigid cartridge in different positions during insertion into the disk drive; and

FIGURE 8 is a view of another embodiment of disk drive frame for a drive according to the invention.

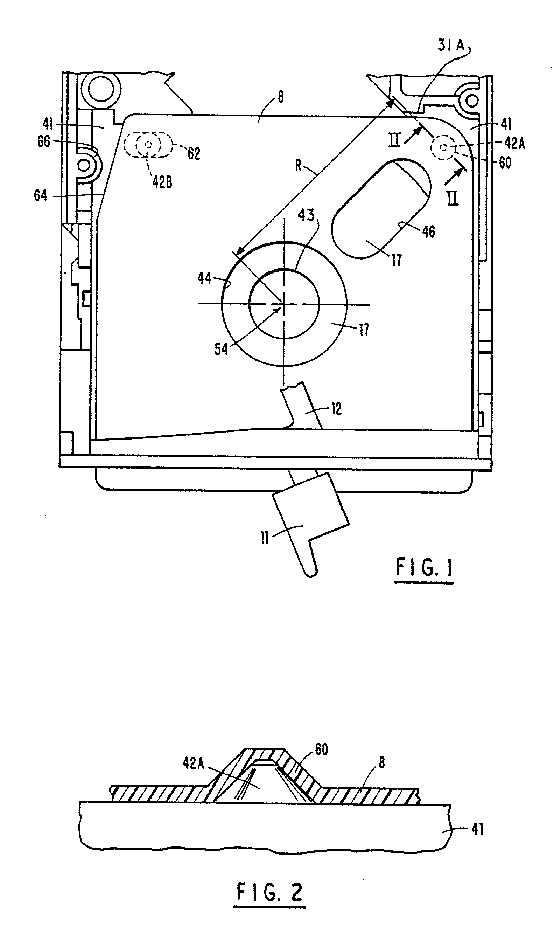

An embodiment of disk drive according to the invention is intended for use with an exchangeable rigid, flexible disk cartridge 8 (Fig. 1). The cartridge 8 has upper and lower walls forming a cavity in which is loosely housed a thin, flexible, floppy disk 17. Data tracks on the disk 17 are exposed through radially extending aligned slots in the upper and lower walls, one only of which (46) is illustrated. The upper and lower walls have central apertures forming a through-hole 44 exposing an annular portion of the disk 17 around a central aperture 43 which is smaller than the through-hole 44. The lower wall of the cartridge 8 contains a movable, radially extending cleaning pad (not shown) diagonally opposite to the slot 46. One corner of the front edge of the cartridge has an inclined portion 64. Near the other corner of the lower wall of the cartridge 8 is formed a taper-walled registration recess 60 (Fig. 2) and adjacent the portion 64 near the one corner is a taper-walled, elongated registration recess 62.

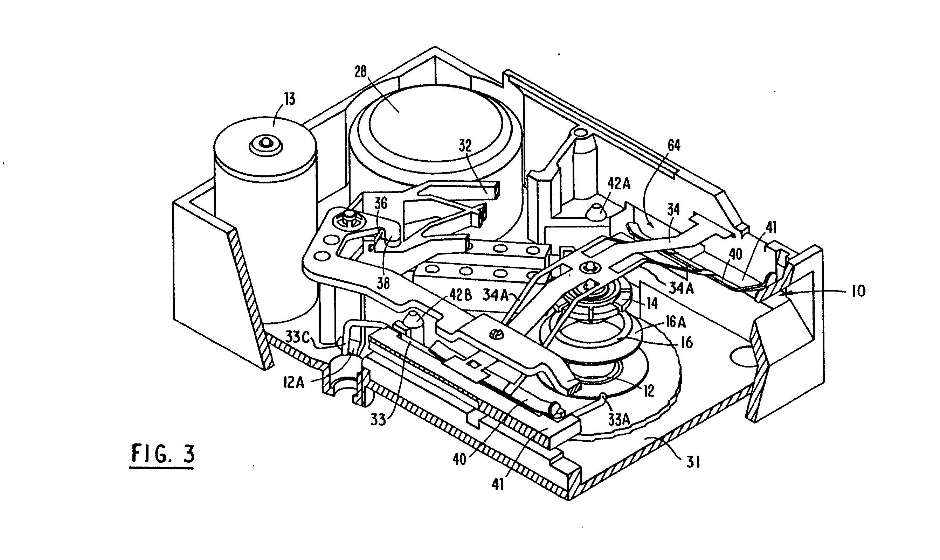

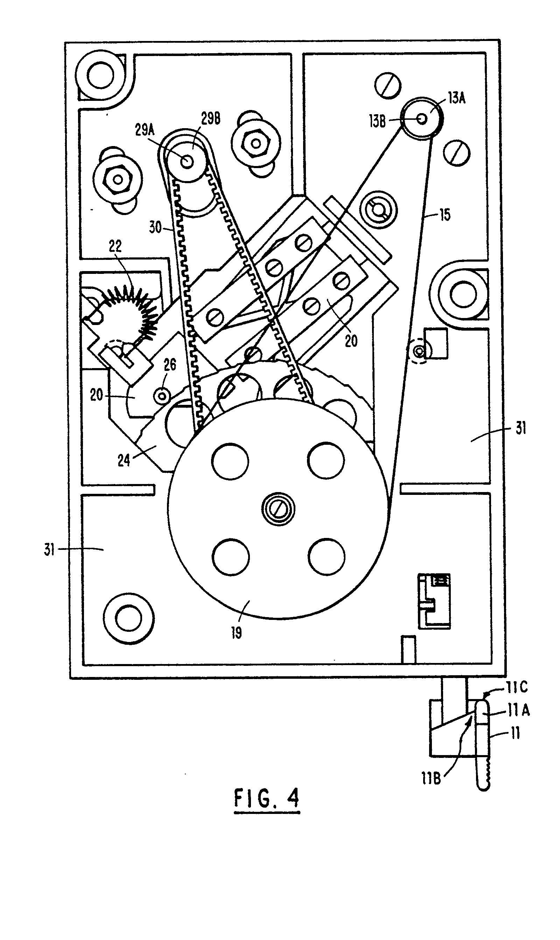

The disk drive (Fig. 3) to accommodate such a cartridge has a slot 10 in the front, which is deeper than the depth of the cartridge. Within the slot, the drive has two fixed ledges 41, one at each side, which constitute guide and registration surfaces for the cartridge. Projecting up from the ledges 41 are two conical registration pins 42A and 42B, adapted to be engaged in the registration recess 60 (Fig. 2) and registration recess 62 (Fig. 1), respectively. In a base frame 31 of the drive is rotatably mounted a spindle 16 (Fig. 3) which has an annular top with outer bevelled face 16A, intersecting the path of a cartridge along the ledges 41. Below the base frame 31 (Fig. 4), a shaft on the spindle 16 carries a pulley 19 around which is entrained a belt 15 drivingly connecting the pulley 19 to a drive pulley 13A on shaft 13B of a d.c. motor 13 (Fig. 3) above the base frame 31.

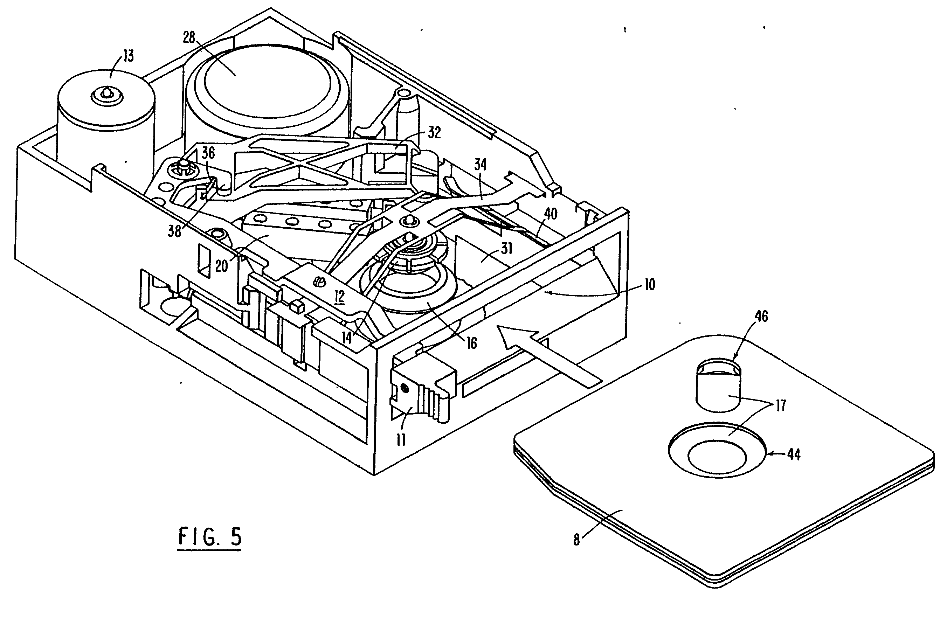

A collet 14 for engagement in the aperture 43 of a disk 17 is supported above and aligned with the spindle 16 by a leaf spring 34 extending between side walls of the frame. The collet 14 is depressible to engage in the aperture 43 of a disk 17 to centre the disk and to clamp the disk to the rotatable spindle 16, by a pivoted lever 12 which is pivotable to engage and press down the spring 34 carrying with it the collet 14. The lever 12 is pivotable by a handle 11 (Fig. 5) from a position in which the lever lies along the side of the frame clear of the spring 34 and the handle is to one side of the slot 10 (Fig. 5) to a position (Fig. 1) in which the lever 12 extends across the middle portion of the spring 34 and the handle 11 is in the middle of the slot 10, blocking entry thereto.

Integral with the leaf spring 34 (Fig. 3) are two pairs of spring fingers 34A which extend outwardly from the middle portion towards the side walls of the frame. The fingers 34A on each side carry at their ends a shaped guide plate 40. The shaped guide plates 40 are resiliently urged by the fingers 34A towards the ledges 41, and at their forward ends adjacent the slot 10 are inclined upwardly above the slot.

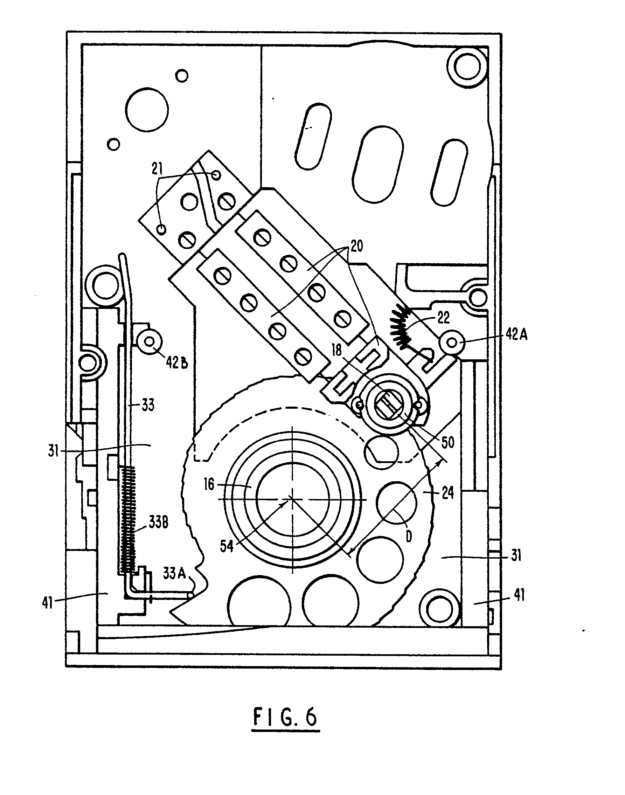

A magnetic transducing head 18 (Fig. 6) is mounted for movement across the lower surface of a disk 17 substantially radially of the spindle 16 by a cantilevered flexure arm transducer carriage 20 fastened to the frame by pins 21. Such a carriage 20 is described in more detail in copending application 82111572.2 (EP—A—0084123). The end of the arm of the carriage 20 carrying the head 18 is pushed radially towards the central axis 54 of the spindle 16 by a spring 22 and has a cam follower 26 (Fig. 4) to engage against the periphery of a head indexing cam 24. The cam follower 26 is a shaft and roller bearing assembly directly under the head 18. The cam 24 (Fig. 6) has a stepped cam surface and is rotatably mounted about the axis 54. Each of fortysix cam dwells corresponds to a data track position on a disk 17. The cam 24 is rotated by a positive drive belt 30 (Fig. 4) driven by pulley 29B mounted on shaft 29A of a stepper motor 28 (Fig. 3). Operation of the stepper motor 28 enables the cam 24 to move the cam follower 26 to index the head 18 to each track. The head 18 projects above the ledges 41 and in its movement is held at the same distance above the plane of the ledges by the carriage 20.

Above the transducer carriage 20 (Fig. 5) is a pressure pad arm 32 which carries at its free end a pressure pad (not shown) which can enter the slot 46 in the upper wall of a cartridge 8 to bear down on the upper surface of the disk 17 in alignment with the head 18. The arm 32 is normally springloaded down to hold a disk 17 against the head 18 by a spring whose end 36 is engaged by a finger 38 on the lever 12 when the latter is in the open position (Fig. 5) along the side wall of the frame. By such engagement the arm 32 is lifted clear of the path of the cartridge 8 on the ledges 41.

A rod 33 (Fig. 6) is pivotally mounted in the frame 31 below the open position of the lever 12. The rod 33 is bent to one side and upward at its forward end to form a probe 33A in alignment with cleaning pad in a cartridge 8 in the drive. At its other end, the rod 33 is bent downwardly to form a cam follower 33C (Fig. 3). A coil spring 33B (Fig. 6) surrounds the rod 33 and normally biases the rod to lift the probe 33A towards the cartridge. The lever 12 carries a depending cam 12A (Fig. 3) which engages the cam follower 33C in the open position of the lever 12 to pivot the rod 33 against the bias of the spring 33B and to depress the probe 33A below the ledges 41.

To load a cartridge 8 (Fig. 5) into the drive, the lever 12 is moved left by the handle 11 to the open position. This opens the slot 10, raises collet 14 and head pressure-pad arm 32 and depresses cleaning-pad pressure probe 33A out of the insertion part of the cartridge.

The cartridge 8 is inserted through the slot 10 onto the ledges 41 and pushed in until the front edge engages the bevelled face 16A of the spindle 16. The front edge has previously engaged the guide plates 40 and lifted them against the light bias of the spring fingers 34A. Thereafter the plates 40 apply the light pressure of fingers 34A to press the cartridge downwardly.

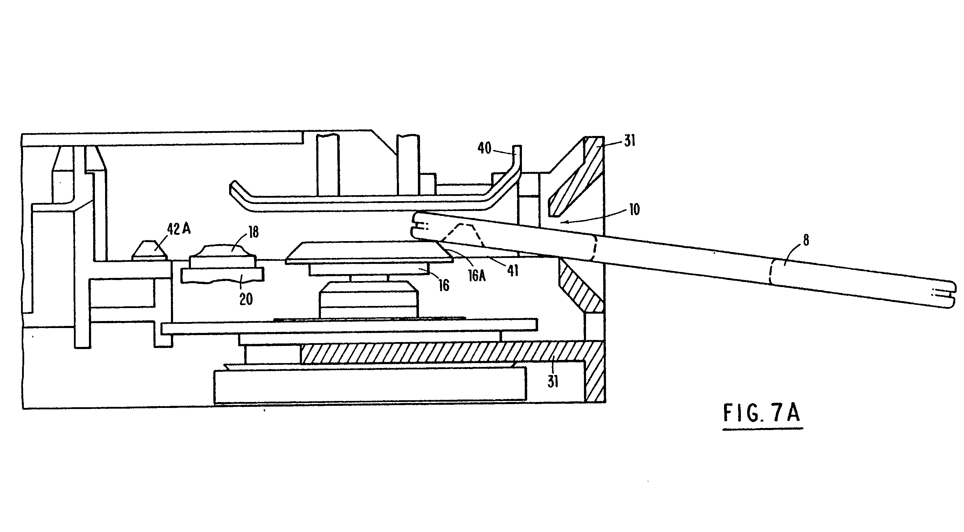

As the cartridge 8 is pushed further into the drive, the front edge rides up the bevelled face 16A of the spindle 16 (Fig. 7A) and the cartridge tilts upwardly, being held against the spindle by the plates 40.

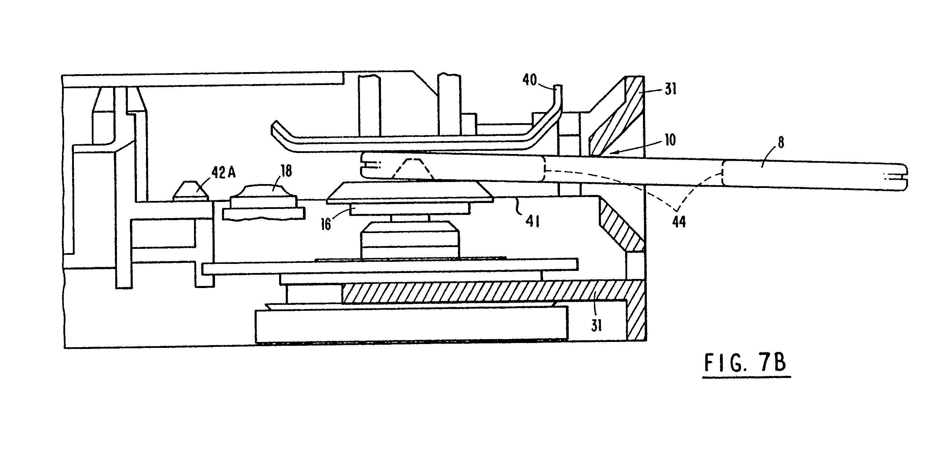

Further movement of the cartridge 8 into the drive (Fig. 7B) allows the plates 40 to pivot the cartridge onto the top of the spindle 16 and against the upper edge of the slot 10. The cartridge 8 continues to ride across the top of the spindle 16 until the aperture 44 begins to clear the spindle.

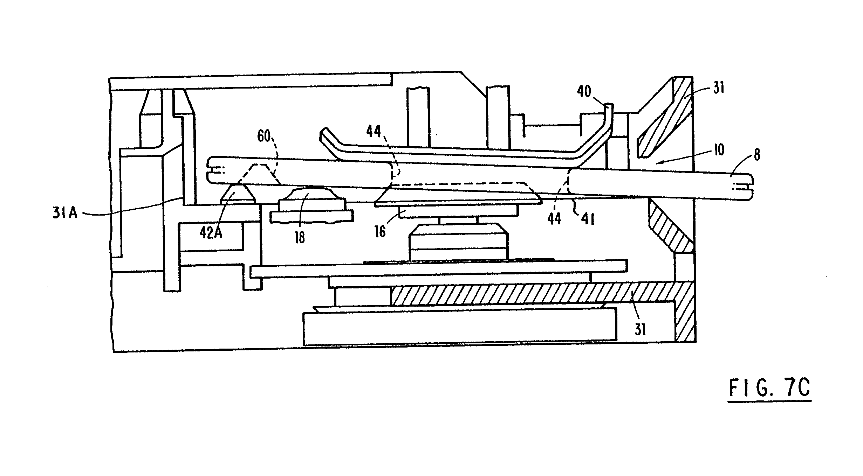

Before clearing the spindle, the front edge of the cartridge 8 passes clear over the head 18 and strikes the conical registration pins 42A and 42B. The front edge is then lifted by the pins (Fig. 7C) and the aperture 44 allows the cartridge to slip down over the spindle 16 and onto the lower edge of the slot 10, due to the pressure of the guide plates 40. The pins 42A and 42B continue to lift the cartridge clear of the head 18 until the read/write access slot in the lower wall of the cartridge is over the head.

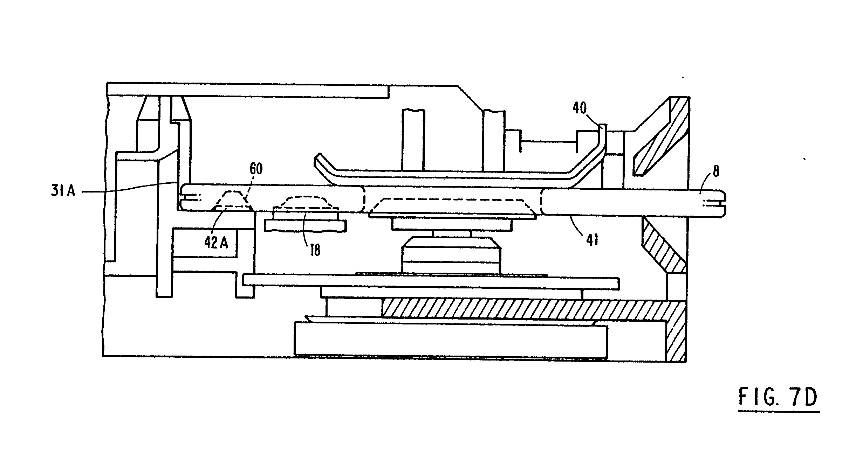

The loading operation is completed when the cartridge is pushed forward so that the tapered-wall recess 60 can slip down over the registration pin 42A (Fig. 7D) and the tapered-wall slot 62 over the pin 42B (Fig. 1).

As the recess 60 in cartridge 8 registers with pin 42A, the cartridge snaps down into a registered position over pins 42A and 42B and against guide and registration ledges 41. The guide plates 40 continue to provide the downward bias pressure to snap the cartridge 8 over the registration pins. This snap action gives the operator positive tactile and auditory feedback that cartridge 8 has indeed registered in the drive.

When recess 60 has reached pin 42A, and the cartridge 8 snaps down into the registered position, the read/write access slot in the cartridge will be in a position such that head 18 can penetrate into the plane of the disk within the cartridge. With the cartridge properly registered on pins 42A and 42B, handle 11 is moved to the right to pivot the lever 12 to the closed position to centre and clamp the disk on the spindle, to lower the pressure pad arm and to raise the cleaning pad probe.

The registration geometry of the cartridge 8 and the drive, when the cartridge is fully inserted and aligned by registration pins 42A and 42B, is such that registration recesses 60 and 62 fit over registration pins 42A and 42B, respectively. Cartridge 8 is fixedly positioned relative to rotation axis 54 for disk 17. Pin 42A and registration recess 60 are precisely positioned so that there is a predetermined distance R from axis 54 to the centre of pin 42A and recess 60.

Pin 42B registers in elongated recess 62 of the cartridge to define the angular orientation of the cartridge about axis 54 in the drive. By using an elongated recess 62 rather than a circular recess, it is not critical to maintain a predetermined distance between pin 42B and pin 42A. It is only necessary that pin 42B and recess 62 be positioned so that cartridge 8 has the proper angular orientation relative to axis 54.

With cartridge 8 snapped down onto its guide and registration surfaces 41 over the registration pins 42A and 42B, the spindle access aperture 44 and the recording access slot 46 will be properly aligned with the spindle and recording head.

The bevelling of the walls of the recesses 60 and 62 match the conical surfaces of pins 42A and 42B, so as to assist the biased plates 40 to push the cartridge into the registered position relative to axis 54. When the cartridge snaps down over the registration pins, the bottom of the cartridge 8 rests on the registration ledges 41.

The drive includes a blocking member 66 just above the ledge 41 on the lever side wall in the path of cartridge 8. The truncated corner 64 of cartridge 8 allows full insertion of cartridge 8. If cartridge 8 is not properly oriented, the blocking member 66 prevents full insertion of the cartridge into the disk drive. As the lever 12 moves to the closed position after cartridge 8 is inserted, finger 38 moves away from spring end 36. This allows the arm bias spring underneath arm 32 to pull the arm down against the upper surface of disk 17, so that the pressure pad protrudes slot 46 in cartridge 8 to hold the disk against the recording head. The head 18 protrudes into the plane of the disk from the bottom of the disk drive through the corresponding slot in the bottom wall of cartridge 8.

Movement of the load lever 12 to the closed position presses leaf spring 34 down. This puts increased pressure on spring fingers 34A and guide plates 40 to register the cartridge firmly on conical pins 42A and 42B and hold the bottom of the cartridge flat against the guide and registration ledges 41. Depression of the leaf spring 34 also moves the collet 14 down through the aperture 43 of disk 17 and clamps disk 17 to spindle 16.

Movement of the lever 12 to the closed position also raises probe 33A to put pressure on a cleaning pad in the bottom wall of cartridge 8. The cam 12A is moved away from the cam follower 33C, allowing the spring 33B to bias the rod 33 to lift the probe 33A.

Handle 11 has a projection 11A (Fig. 4) which has a cam surface 11B extending far enough down so that if cartridge 8 is not fully inserted into the drive, surface 11B will hit the side wall of the cartridge and block handle 11 from actuating the collet clamping mechanism. This prevents the collet from damaging the centre aperture of disk 17 in cartridge 8. If the cartridge is almost fully inserted into the drive, but not properly registered, then rounded surface 11C of handle 11 will push cartridge 8 into the drive so that it registers on pins 42 as lever 12 is moved across (Fig. 1). Thus, surfaces 11B and 11C of handle 11 ensure either that the disk 17 cannot be clamped if the cartridge is not properly loaded or that the cartridge will be properly loaded before the disk is clamped.

Beyond the registration pin 42A, the frame 31 (Fig. 1) has a back stop wall 31A which prevents an inserted cartridge 8 from being pushed too far into the drive. The wall 31A and pins 42A and 42B are spaced so that if the leading edge of the cartridge strikes the wall 31A, for example when it is held tilted by an operator, the trailing edges of the registration recesses 60 and 62 will not have passed the tops of the conical pins 42A and 42B. When the operator releases the cartridge 8, the spring-biased plates 40 will snap the cartridge back into the registration position over the pins.

The cartridge is withdrawn by reversing the loading procedure. The lever 12 is moved to the left (Fig. 1) by the handle 11. This allows the spring 34 to lift collet 14, and moves the finger 38 and cam 12A to lift the pressure pad arm 32 and lower the probe 33A away from cartridge 8. The cartridge can then be pulled from the drive manually. As the cartridge starts to come out of the drive, its front edge rides up on the registration pins 42A and 42B and over spindle 16 (Fig. 7C). Thus, the rigid shell of cartridge 8 lifts it clear of spindle 16 and head 18 (Fig. 3) as the cartridge rides up on pins 42 and spindle 16. Then the cartridge is easily pulled out. Initial release can be assisted by slightly tilting the cartridge against the downward bias of plates 40.

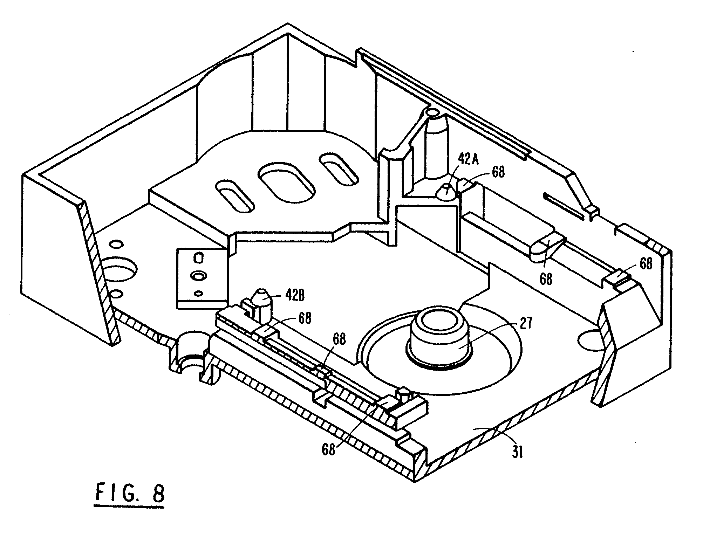

In an alternative embodiment of frame 31 (Fig. 8), guide and registration pads 68 are used rather than guide ledges 41. The guide and registration pads 68, a hub 27 for the spindle 16 and head indexing cam 24 and registration pins 42A and 42B are preferably moulded with frame 31 as a single piece of plastics material. To simplify the moulding tolerances, the guide ledges 41 are replaced by guide and registration pads 68. The pads define the registration plane of the cartridge relative to the spindle and head. By replacing the guide shelves with guide pads, only the position of the surface of each pad is critical rather than the surface position of both entire ledges.

## Claims

1. A disk drive for reading and writing magnetic signals on a flexible magnetic disk (17) housed inside a rigid cartridge (8), the drive having a bevelled rotatable drive spindle (16) mounted on a frame (31) of the drive for rotating the magnetic disk, a read/write head (18) for reading and writing signals on the magnetic disk, and having registration means (41; 68) for registering the cartridge in a plane relative to the spindle and the recording head, the spindle and the head protruding above the registration plane of the guide and registration means into the initial insertion path of the cartridge, the cartridge having registration recesses (60, 62) for mating with registration pins (42A, 42B) protruding above the registration plane of the cartridge beyond the head (18), characterized by elongated, fixed registration means (41; 68) for guiding the cartridge during its movement into the drive, the cartridge first tilting up over the spindle and passing clear over the head, bevelled registration pins (42A, 42B) then contacting the leading edge of the cartridge and lifting the cartridge over the tops of the pins, and the cartridge finally dropping onto the registration plane of the registration and guide means (41; 68), when the recesses align with the pins, whereby the cartridge is registered in the proper plane and centred relative to the spindle.

2. A drive according to claim 1, including means (34A, 40) for biasing the cartridge against the guide means and the top of the spindle as the cartridge is inserted, the cartridge, when the recesses and pins align, snapping into a registered position, defined by the guide means and the pins, relative to the drive spindle with spindle and head access openings of the cartridge aligned with the spindle and head of the drive.

3. A drive according to claim 1 or 2, in which the registration pins (42A, 42B) are conical in shape and the recesses (60, 62) have bevelled walls to match the pins.

4. A drive according to any preceding claim, including an elongated lever (12) having an open and closed position and being movable between the two positions, actuating means (34) for lifting a disk clamp collet (14) away from the spindle when the lever is moved to the open position and for lowering the collet to clamp the disk to the spindle when the lever is moved to the closed position.

5. A drive according to claim 4, including second actuating means (38, 36) for lifting a recording head pressure pad away from the disk when the lever is moved to the open position and for lowering the pressure pad against the disk and opposite the head when the lever is moved to the closed position.

6. A drive according to claim 5, including third actuating means (12A, 33C) for lowering a pressure probe (33A) away from the cartridge when the lever is moved to the open position and for moving the pressure probe against a disk cleaning pad when the lever is moved to the closed position.

**Patentansprüche**

1. Platteneinheit zum Lesen und Schreiben von Magnetsignalen von einer flexiblen bzw. auf eine flexible in einer Hartkassette befindlichen Magnetplatte (17), wobei die Einheit eine an einem Rahmen (31) der Einheit angeordnete konische, drehbare Antriebswelle (16) zum Drehen der Magnetplatte, einen Schreib-/Lesekopf (18) zum Lesen und Schreiben von Signalen von der bzw. auf die Magnetplatte und Justiereinrichtungen (41; 68) zum Ausrichten der Kassette in eine durch die Welle und den Schreibkopf bedingte Ebene aufweist, wobei die Welle und der Kopf oberhalb der Ausrichtebene der Führungs- und Justiereinrichtungen in den Anfangsbereich der Einführungsbahn für die Kassette hineinragen, wobei die Kassette Aussparungen (60, 62) aufweist, in die oberhalb der Ausrichtebene der Kassette hinter dem Kopf (18) befindliche Justierstifte (42A, 42B) passen, gekennzeichnet durch längliche, feste Justiereinrichtungen (41; 68), mit deren Hilfe die Kassette in die Einheit eingeführt wird, wobei die Kassette zunächst schräg über die Welle und gerade über den Kopf geführt wird, wobei konische Justierstifte (42A, 42B) dann die Vorderkante der Kassette kontaktieren und diese über die Oberfläche der Stifte heben, so daß die Kassette schließlich auf die Ausrichtebene der Justier- und Führungseinrichtungen (41; 68) gelangt, sobald die Stifte in den Aussparungen sitzen, wodurch die Kassette in der richtigen Ebene gehalten und in Bezug auf die Welle zentriert wird.

2. Einheit nach Anspruch 1, gekennzeichnet durch Vorrichtungen (34A, 40), welche die Kassette während des Einführens gegen die Führungen und die Oberfläche der Welle drücken, wobei die Kassette nach dem Einführen der Stifte in die Aussparungen in einer Justierstellung einrastet, welche durch die Führungen und die Stifte definiert ist und durch die Antriebswelle bedingt ist, so daß die Ausnehmungen der Kassette für die Welle und den Kopf die Welle und den Kopf der Einheit aufgenommen haben.

3. Einheit nach Anspruch 1 oder 2, dadurch gekennzeichnet, daß die Justierstifte (42A, 42B) konisch geformt sind und daß die Aussparungen (60, 62) konische Wände aufweisen und somit die Stifte aufnehmen können.

4. Einheit nach einem der vorhergehenden Ansprüche, gekennzeichnet durch einen länglichen Hebel (12), der eine Öffnungs- und eine Schließstellung aufweisen kann und zwischen diesen beiden Stellungen bewegbar ist, und durch Vorrichtungen (34) zum Abheben eines Plattenspannringes (14) von der Welle, sobald der Hebel in Öffnungsstellung steht, und zum Absenken des Ringes zum Befestigen der Platte auf der Welle, sobald der Hebel in Schließstellung ist.

5. Einheit nach Anspruch 4, gekennzeichnet durch zweite Vorrichtungen (38, 36) zum Abheben eines Schreibkopf-Druckkissens von der Platte, sobald der Hebel in Öffnungsstellung steht, und zum Absenken des Druckkissens auf die Platte und gegen den Kopf, sobald der Hebel in Schließstellung ist.

6. Einheit nach Anspruch 5, gekennzeichnet durch dritte Vorrichtungen (12A, 33C) zum Absenken eines Druckfühlers von der Kassette, sobald der Hebel in Öffnungsstellung ist, und zum Bewegen des Druckfühlers zu einem Plattenreinigungskissen, sobald der Hebel in Schließstellung ist.

**Revendications**

1. Unité de disquettes pour lire et enregistrer des signaux magnétiques sur un disque magnétique souple (17) logé à l'intérieur d'une cartouche rigide (8), l'unité possédant une broche d'entraînement (16) rotative conique montée sur un châssis (31) de l'unité pour faire tourner le disque magnétique, une tête de lecture-écriture (18) pour lire et enregistrer des signaux sur le disque magnétique, et possédant des moyens d'alignement (41; 68) pour aligner la cartouche dans un plan par rapport à l'axe et à la tête d'enregistrement, la broche et la tête dépassant au-dessus du plan d'alignement des moyens de guidage et d'alignement dans le trajet d'insertion initial de la cartouche, la cartouche possédant des encoches d'alignement (60, 62) qui épousent la forme des ergots d'alignement (42A, 42B) dépassant au-dessus du plan d'alignement de la cartouche au-delà de la tête (18), caractérisée par des moyens d'alignement (41; 68) fixes allongés pour guider la cartouche pendant son entrée dans l'unité, la cartouche basculant d'abord par-dessus la broche et passant librement au-dessus de la tête, des ergots d'alignement conique (42A, 42B) venant ensuite au contact du bord antérieur de la cartouche et levant la cartouche au-dessus du sommet des ergots, et la cartouche retombant enfin sur le plan d'alignement des moyens d'alignement et de guidage (41; 68), quand les encoches s'alignent avec les ergots, grâce à quoi la cartouche est alignée dans le bon plan et centrée par rapport à la broche.

2. Unité selon la revendication 1, comportant des moyens (34A, 40) pour pousser la cartouche contre le moyen de guidage et le haut de la broche lors de l'insertion de la cartouche, laquelle cartouche, quand les encoches et les ergots sont alignés, s'enclenchant dans une position alignée, définie par le moyen de guidage et les ergots, par rapport à la broche d'entraînement, les ouvertures d'accès de broche et de tête que comporte la cartouche étant alignées avec la broche et la tête de l'unité.

3. Unité selon la revendication 1 ou 2, dans laquelle les ergots d'alignement (42A, 42B) ont une forme conique et les encoches (60, 62) ont des parois biseautées pour épouser la forme des ergots.

4. Unité selon l'une quelconque des revendications précédentes, comportant un levier allongé (12) ayant une position ouverte et une position fermée et étant mobile entre les deux positions, un moyen d'actionnement (34) pour soulever un contre-cône (14) de blocage de disque et l'éloigner de la broche quand le levier est amené en position ouverte et pour abaisser le contre-cône afin de bloquer le disque sur la broche quand le levier est amené en position fermée.

5. Unité selon la revendication 4, comportant un deuxième moyen d'actionnement (38, 36) pour soulever un patin d'appui de tête d'enregistrement et l'éloigner du disque quand le levier est amené en position ouverte et pour abaisser le patin d'appui contre le disque et en regard de la tête quand le levier est amené dans la position fermée.

6. Unité selon la revendication 5, comportant un troisième moyen d'actionnement (12A, 33C) pour abaisser un détecteur de pression (33A) et l'éloigner de la cartouche quand le levier est amené en position ouverte et pour amener le détecteur de pression contre un bloc de nettoyage de disques quand le levier est amené dans la position fermée.

FIG. 1

FIG. 2

FIG. 3

$$\underline{FIG.\ 4}$$

FIG. 5

0 086 395

FIG. 6

FIG. 7A

0 086 395

FIG. 7B

0 086 395

FIG. 7C

0 086 395

FIG. 7D

0 086 395

FIG. 8